# EUROPÄISCHE PATENTSCHRIFT

(11) **EP 1 719 618 B1**
(45) Veröffentlichungstag und Bekanntmachung des Hinweises auf die Patenterteilung: **08.08.2007**
(21) Anmeldenummer: 06100808.2
(22) Anmeldetag: 25.01.2006
(51) Int. Cl.: B41F 13/004, B41F 13/008, B41F 13/14

(54) **Druckeinheit**
Printing unit
Unité d'impression

(30) Priorität: 07.05.2005 DE 102005021217
(43) Veröffentlichungstag der Anmeldung: 08.11.2006
(62) Teilanmeldung aus: 06121400.3
(73) Patentinhaber: Koenig & Bauer AG, 97080 Würzburg (DE)
(72) Erfinder: Koblinger, Michael, 97225, Zellingen (DE); Röthlein, Ewald, 97282, Retzstadt (DE)

(56) Entgegenhaltungen:
- EP-A- 0 930 158
- EP-A- 0 934 826
- DE-A1- 10 046 367
- DE-U1- 29 813 132
- GB-A- 2 069 660
- JP-A- 5 064 882
- US-A- 2 956 826
- US-A- 4 354 769
- US-A- 4 471 846
- US-A- 4 527 788

## Beschreibung

Die Erfindung betrifft eine Druckeinheit gemäß dem Oberbegriff des Anspruchs 1.

Für eine winkelsynchrone Steuerung mehrerer unabhängig voneinander angetriebener Zylinder in einer Druckmaschine benötigt die Antriebssteuerung zu jeder Zeit die genaue Winkellage der einzelnen Zylinder. Diese Winkellage erhält die Motorsteuerung von Winkelgebern ("Multiturngebern"), die jedoch z. B. aufgrund von Getriebeübersetzungen im Antrieb nicht unmittelbar die Winkellagen der Zylinder wiedergeben. Die jeweilige Winkellage der Zylinder kann in diesem Fall nur unter Berücksichtigung des genauen Übersetzungsverhältnisses von der Antriebssteuerung fortlaufend neu errechnet werden.

Aus diesem Grunde ist es notwendig, den Zylindern eine reproduzierbare mechanische "Nullstellung" bzw. Referenzwinkellage zuzuordnen, mit der ein Abgleich von Zylinderlage und Winkelgeber möglich ist. Über diese Referenzwinkellage und die Winkelgebersignale ist dann die Antriebssteuerung in der Lage, zu jedem Zeitpunkt die aktuelle Zylinderlage zu berechnen und eine winkelsynchrone Steuerung mehrerer Zylinder durchzuführen.

Es soll also der Absolutwert der Winkellage eines Zylinders oder zweier oder mehrerer Zylinder zueinander bestimmt bzw. die Zylinder entsprechend ausgerichtet werden, um die Anbindung von mechanischen Drehwinkelsynchronisationseinrichtungen wie Zahnrädern oder elektronischen Drehwinkelsynchronisationseinrichtungen wie Winkelsensoren zu ermöglichen, ohne die Drehwinkelsynchronisationseinrichtungen in einem bestimmten Winkel an die Zylinder anbinden zu müssen.

Es sind Vorrichtungen bekannt, bei denen ein Synchronlauf zweier oder mehrerer Zylinder in einer genau festgelegten Winkellage zueinander über das Anbinden von Zahnrädern erreicht wird, die hierzu in ihrer Winkellage über Markierungen, z. B. Passfedernuten in Zahnrad und Zylinderzapfen, exakt zum Zylinder und den anderen eingreifenden Zahnrädern ausgerichtet werden müssen.

Passfedernutsysteme sind in ihrer Herstellung relativ kostspielig (Einbringen mehrerer Nuten in exakter Winkellage in mehreren Teilen), schränken in der konstruktiven Freiheit ein und können den Rundlauf empfindlicher Systeme stören. Weiterhin sind Passfedernutsysteme hinsichtlich ihrer Winkellage in der Regel nicht spielfrei. Schließlich sind Ausrichtsysteme von Zahnrädern zum Zylinder in der Regel im Getriebekasten mit enthalten, so dass deren Kontrolle und Anwendung einen hohen Montageaufwand bedeutet.

Aus der EP 03 18 959 B1 ist ein Antriebssystem einer Rotationsdruckmaschine bekannt, wobei ein Plattenzylinder für das Auflegen von Platten ausgerichtet und nach dem Plattenauflegen wieder in den Antriebsstrang eingekuppelt wird, wobei Phasenabweichungen korrigiert werden. Das Einstellen einer "Nullstellung" ist hier nicht angesprochen.

Die EP 07 10 556 B1 bezieht sich auf eine sich wiederholende Positionierungssicherstellung des Lagewinkels des Plattenzylinders zu einem Plattenaufleger, um die Funktion des Plattenauflegers zu sichern.

Die WO 02/076743 A1 offenbart Antriebe für Druckwerke mit Zahnrädern, die drehfest mit den Zapfen der zugeordneten Zylinder verbunden sind.

Die DE 299 02 083 U1 und die DE 298 13 132 U1 offenbaren Vorrichtungen zum reproduzierbaren Festlegen von räumlichen Winkellagen von Zylindern in Druckmaschinen.

Die US 5 195 838 A beschreibt eine rebschlüssige hydraulische Spannvorrichtung zum Fixieren eines Zahnrades in einer festlegbaren Position auf einem Zapfen eines Zylinders einer Druckmaschine.

Die EP 0 644 048 A und die DE 100 46 367 A1 weisen Zylinderpaare auf, die von einem eigen Elektromotor angetrieben sind.

Die US 4 354 769 A und die GB 2 069 660 A beschreiben reibschlüssig wirkende Befestigungselemente.

Der Erfindung liegt die Aufgabe zugrunde, eine Druckeinheit zu schaffen.

Diese Aufgabe wird erfindungsgemäß durch die Merkmale des Anspruchs 1 gelöst.

Die mit der Erfindung erzielbaren Vorteile bestehen insbesondere darin, dass nunmehr sowohl bei der Maschinenmontage als auch beim späteren Kundenbetrieb eine günstige, einfache, schnelle und genaue Winkellagenbestimmung der Zylinder ermöglicht wird, um die antriebsseitige Winkelsynchronisierung der Zylinder schnell und kostengünstig, ohne Ausrichtsystem zu ermöglichen. Im Falle der Erfindung können somit im Gegensatz zum Stand der Technik Synchronisierungseinrichtungen für einen oder mehrere Zylinder ohne deren Ausrichtung auf die betroffenen Zylinder angebunden oder ausgewechselt werden. Weiterhin ist es mit dem Ausrichtsystem nicht erforderlich, zwischen separat angetriebenen und gemeinsam angetriebenen Zylindergruppen bzw. Zylindereinheiten zu unterscheiden, so dass eine Reduzierung der Lösungsvarianten erreicht werden kann.

Auch ist das vorgeschlagene Ausrichtkonzept vollkommen unabhängig vom jeweiligen Antriebskonzept.

Es ist somit eine Ausrichtvorrichtung vorgesehen, über die die Zylinder zueinander bzw. zu einem ortsfesten Punkt außerhalb des Zylinders in gewünschte, wiederholbare Referenzwinkellagen gebracht werden und hier z. B. formschlüssig fixiert bzw. über einen Anschlag in ihrer Lage gehalten werden.

Im Falle von mechanisch synchronisierten Zylindern ist es dann möglich, z. B. Synchronisationszahnräder in beliebiger Winkellage an den Zylinder anzubinden, z. B. mittels Ringspannelementen, und trotzdem eine exakte Winkelsynchronisierung der Zylinder, sowohl absolut als auch zueinander, zu erhalten.

Bei steuerungstechnisch synchronisierten Zylindern kann die Referenzwinkellage bzw. "ist"-Winkellage eines jeden Zylinders über angebundene, meist im Elektromotor enthaltene Winkelmesseinrichtungen als Referenz- bzw. Basiswinkellage z. B. in der Antriebssteuerung gespeichert werden. Durch die konstruktiv bekannten theoretischen Winkellagen der Zylinder bzgl. deren Ausrichtposition zueinander und absolut können dann die Zylinder über die Antriebssteuerung in beliebige Winkellagen zueinander und absolut gedreht und so je nach Wunsch mit vorgewählten Winkellagen zueinander und absolut winkelsynchron oder in beliebigen Asynchronverhältnissen zueinander betrieben werden.

Eine spätere Kontrolle der bereits früher eingestellten Referenzwinkellagen ist mittels derselben Ausrichtvorrichtungen ebenfalls leicht und schnell möglich.

In bevorzugter Weiterbildung der Erfindung ist im Randbereich des auszurichtenden Zylinders, also an einer meist ungenutzten und gut zugänglichen Stelle des Zylinders, in definierter Position eine sich in radialer Richtung erstreckende Passbohrung vorgesehen, in die z. B. Passbolzen bzw. Passstangen oder Lehren einsetzbar sind. Der Zylinder mit dem eingesetzten Passbolzen wird dann so weit gedreht, bis der Passbolzen z. B. am benachbarten Zylinder oder einem anderen Bauteil innerhalb der Maschine anschlägt, wodurch die Referenzwinkellage erreicht wird, oder aber es werden zwei oder mehr benachbarte Zylinder in eine solche Winkellage (Referenzwinkellage) zueinander gebracht, dass eine Lehre in die Passbohrungen eingesetzt oder auf in die Passbohrungen eingesetzte Passbolzen aufgesetzt werden kann. Hierdurch ist auf sehr einfache und präzise Weise eine Bestimmung der Referenzwinkellage möglich mit einer Genauigkeit von beispielsweise +/- 0,2 mm und einer Wiederholgenauigkeit von beispielsweise +/- 0,05 mm.

Ausführungsbeispiele der Erfindung sind in den Zeichnungen dargestellt und werden im Folgenden näher beschrieben.

Es zeigen:
- Fig. 1: eine schematische Darstellung zur Erläuterung der Ermittlung der Referenzwinkellage bei einem Druckwerk mit zwei unabhängig voneinander angetriebenen Druckzylindern;
- Fig. 2: ein erstes Ausführungsbeispiel der Ausrichtvorrichtung gemäß der Erfindung mit einem Passbolzen;
- Fig. 3: ein zweites Ausführungsbeispiel der Ausrichtvorrichtung gemäß der Erfindung mit zwei Passbolzen;
- Fig. 4: ein drittes Ausführungsbeispiel der Ausrichtvorrichtung gemäß der Erfindung mit einer Lehre;
- Fig. 5: ein viertes Ausführungsbeispiel der Ausrichtvorrichtung gemäß der Erfindung mit einer Lehre;
- Fig. 6: ein fünftes Ausführungsbeispiel der Ausrichtvorrichtung gemäß der Erfindung mit zwei aneinander anschlagenden Passbolzen;
- Fig. 7: eine perspektivische Darstellung der Befestigung der Zahnräder auf den Zapfen der Zylinder eines Druckwerks;
- Fig. 8: einen Schnitt durch einen Zapfen und ein Zahnrad eines Zylinders des Druckwerks nach Fig. 7;
- Fig. 9: eine Druckeinheit mit zwei Druckwerken bzw. Zylinderpaaren;
- Fig. 10: eine Druckeinheit mit einem Druckwerk und einem Gegendruckzylinder.

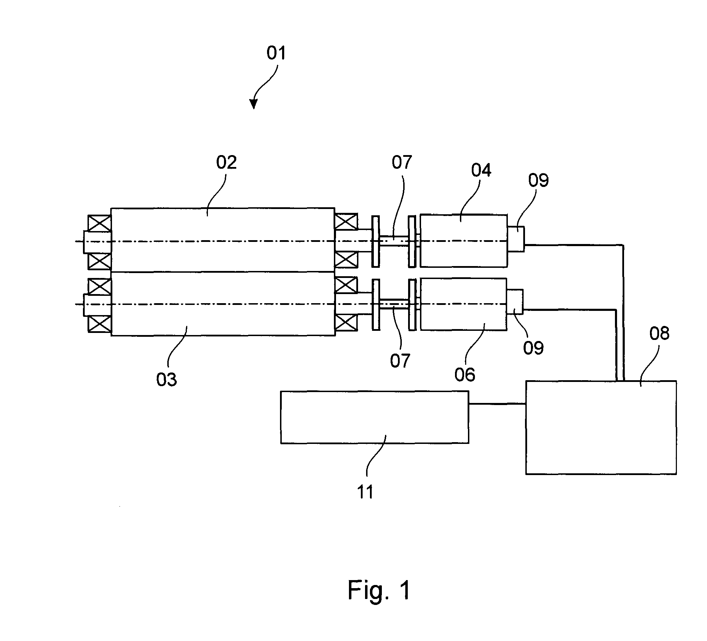

Zunächst wird auf Fig. 1 Bezug genommen. Das dort beispielsweise gezeigte Druckwerk 01 umfasst Zylinder 02; 03, denen jeweils ein eigener wellenloser Antrieb 04; 06, z. B. Elektromotor 04; 06 zugeordnet ist, wobei zwischen jedem Antrieb 04; 06 und dem zugeordneten Zylinder 02; 03 eine Kupplung 07 vorgesehen ist. Über eine Antriebssteuerung 08 sind die Zylinder 02; 03 winkelsynchron antreibbar.

Den Antrieben 04; 06 ist jeweils ein Winkelgeber 09, z. B. ein Multiturngeber 09 zugeordnet, der der Antriebssteuerung 08 fortlaufend Daten zur Winkellage der beiden Zylinder 02; 03 liefert. Aus diesen Daten zur Winkellage errechnet die Antriebssteuerung 08 unter Berücksichtigung weiterer, insbesondere konstruktiver Daten permanent die tatsächliche aktuelle Winkellage der beiden Zylinder 02; 03 und regelt die Antriebe 04; 06, insbesondere relativ zu einer "virtuellen Leitachse" entsprechend.

Wie eingangs erläutert, ist es jedoch erforderlich, den Zylindern 02; 03 zunächst eine reproduzierbare mechanische Nullstellung bzw. Referenzwinkelposition zuzuordnen. Dies wird erreicht, indem unter Verwendung der im Nachfolgenden beschriebenen eingesetzte Passbolzen 13 bzw. Passstange 13 am Umfang bzw. Ballen des benachbarten Zylinders 03 an, wodurch der Zylinder 02 seine Referenzwinkelposition einnimmt. Diese Ausführungsform ist besonders geeignet für Druckmaschinen mit Einzelantriebstechnik. Hiermit ist eine durchmesserunabhängige und sehr gut reproduzierbare Festlegung der Referenzwinkelposition möglich, die auf den ohnehin äußerst genauen Zylinderpositionen und Zylinderdurchmessern beruht.

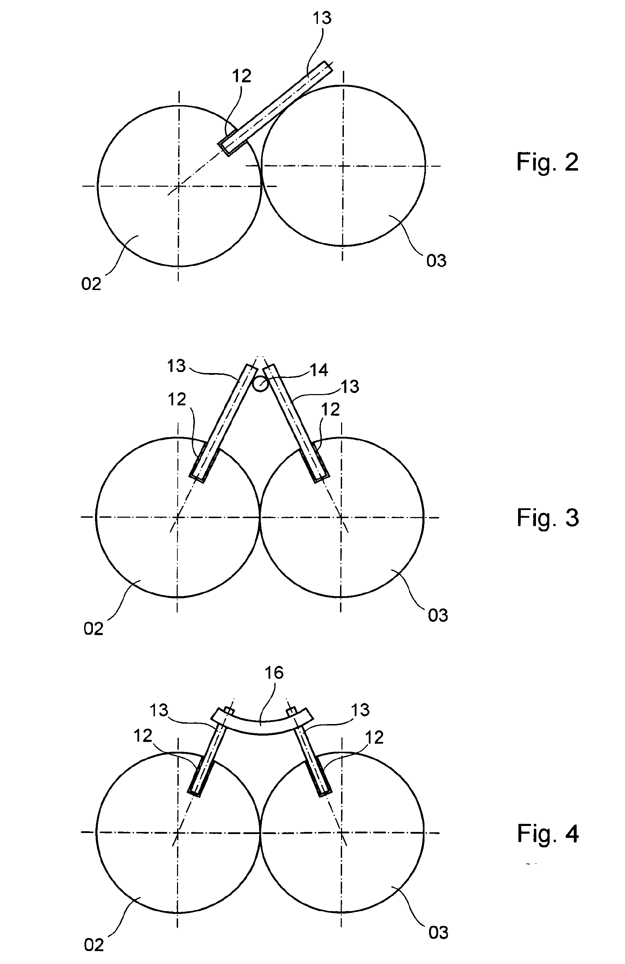

Bei der Ausführungsform nach Fig. 3 weisen beide Zylinder 02; 03 jeweils eine Passbohrung 12 auf, in die jeweils ein Passbolzen 13 bzw. eine Passstange 13 eingesetzt ist. Die beiden Passbolzen 13 bzw. Passstangen 13 der beiden Zylinder 02; 03 schlagen hier an einem externen festen Bezugspunkt 14, beispielsweise einem maschinenfesten Anschlag 14 an, wodurch eine räumliche Festlegung beider Zylinder 02; 03 erfolgt und somit beide Zylinder 02; 03 ihre Referenzwinkelpositionen einnehmen.

Auch diese Ausführungsform ist unabhängig vom Zylinderdurchmesser. Selbstverständlich können auch beide Zylinder 02; 03 gleichzeitig auf entsprechende Weise ausgerichtet werden. Auch ist es möglich, zwischen den Passbolzen 13 bzw. Passstangen 13 und den externen Bezugspunkt 14 geeignete Lehren zwischenzuschalten.

Bei der Ausführungsform nach Fig. 4 weisen wiederum beide Zylinder 02; 03 jeweils eine Passbohrung 12 auf, in die jeweils ein Passbolzen 13 bzw. Passstange 13 eingesetzt ist. An den freien Enden der beiden Passbolzen 13 bzw. Passstangen 13 ist eine Lehre 16 ansetzbar, die einen vorgegebenen Winkel zwischen den beiden Passbolzen 13 bzw. Passstangen 13 definiert. In der gezeigten Position nehmen die beiden Zylinder 02; 03 somit ihre Referenzwinkelpositionen ein und sind in fester Position zueinander ausgerichtet.

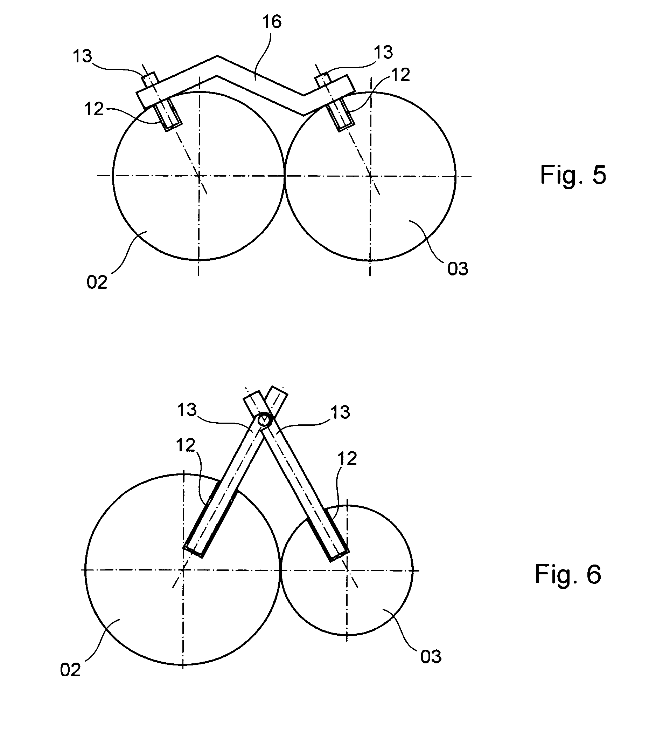

Die Ausführungsform nach Fig. 5 zeigt eine Variante zur Ausführungsform nach Fig. 4, bei der eine auf die Passbolzen 13 bzw. Passstangen 13 der Zylinder 02; 03 aufsetzbare Lehre 16 verwendet wird und die Passbolzen 13 bzw. Passstangen 13 in der Referenzwinkellage der Zylinder 02; 03 parallel ausgerichtet sind. Auch hier sind die Zylinder 02; 03 in fester räumlicher Lage zueinander ausgerichtet. Es ist offensichtlich, dass sich diese Anordnung auf drei und mehr Zylinder erweitern lässt.

Aus den Ausführungsformen nach Fig. 4 und 5 wird deutlich, dass die in die Zylinder eingebrachten Passbohrungen zweier oder mehrerer Zylinder durch eine entsprechende, zylinderdurchmesserunabhängige Lehre in beliebigen Winkellagen zueinander ausgerichtet werden können. Es ist problemlos möglich, über die Variation der Passbohrungslage und der zugehörigen Lehren auf die unterschiedlichen Belange der verschiedenen Maschinenkonfigurationen einzugehen, z. B. einzelnes Festlegen der Zylinder oder mehrfaches Festlegen, Lehrenvariation bei unterschiedlicher Zugänglichkeit oder unterschiedlichem Montage- und Arbeitsablauf usw.

Bei der Ausführungsform nach Fig. 6 weisen wiederum beide Zylinder 02; 03 eine Passbohrung 12 auf, in die jeweils ein Passbolzen 13 bzw. Passstange 13 eingesetzt ist. Die Passbolzen 13 bzw. Passstangen 13 der beiden Zylinder 02; 03 schlagen hier aneinander an, wodurch die beiden Zylinder 02; 03 in räumlich fester Position zueinander ausgerichtet sind und die jeweilige Referenzwinkelposition einnehmen.

Wie des Weiteren aus Fig. 6 deutlich wird, ist es auch möglich, mehrere Zylinder 02; 03 mit deutlich unterschiedlichem Durchmesser mit durchmesserunabhängigen Lehren aufeinander auszurichten, indem man die Tiefen der Passbohrungen 12 in den Zylindern 02; 03 nach speziellen Regeln wählt, z. B. dahingehend, dass der Bohrungsgrund jeweils den gleichen Abstand zur Zylinderachse aufweist. In diese Passbohrungen 12 können dann Lehren mit speziell ausgebildeten Anschlagsflächen eingesteckt werden, deren Abstand Anschlagsfläche zu Aufstandsfläche gleich ist. Hierdurch kann man erreichen, dass die Anschlagsflächen der in die Zylinder 02; 03 eingesteckten Lehren immer einen Abstand zu den Zylinderachsen haben, der einem gewünschten Verhältnis entspricht, z. B. Kontaktpunkt über Zylinderberührungspunkt oder auf der Mittelsenkrechten.

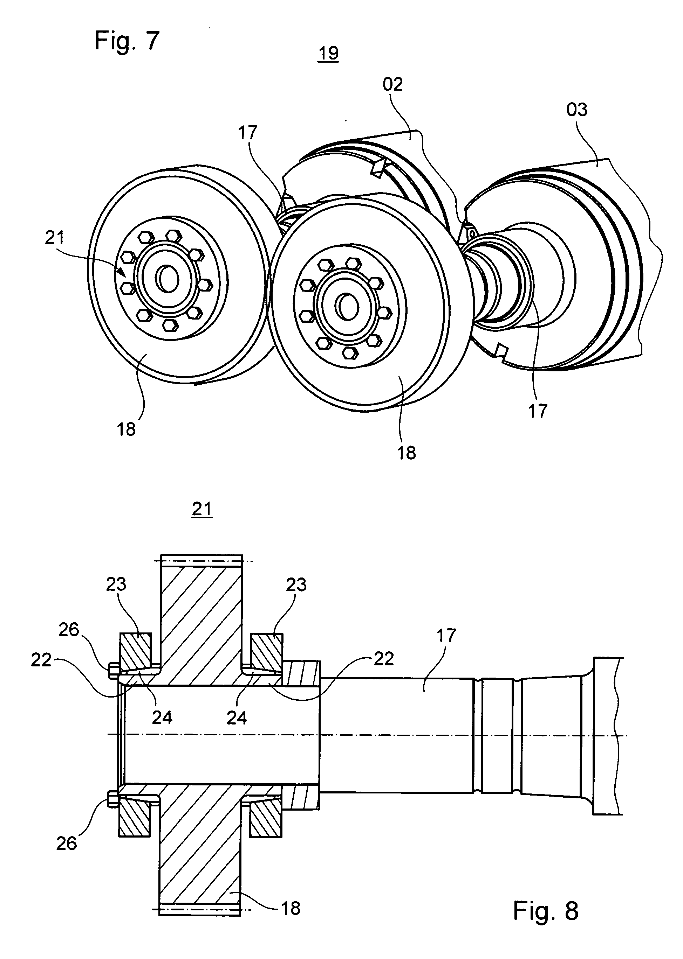

Gemäß einer Ausführungsform der Erfindung ist am Zapfen 17 des jeweils auszurichtenden Zylinders 02 und/oder 03 ein Zahnrad 18 reibschlüssig befestigt, vgl. auch Fig. 7. Zum Festlegen der Referenzwinkellage des jeweiligen Zylinders 02; 03 wird zunächst die reibschlüssige Verbindung zwischen Zapfen 17 und Zahnrad 18 gelöst, dann der Zylinder 02; 03 unter Beibehaltung der Winkelposition des Zahnrads 18 mittels der Ausrichtvorrichtung 12, 13 bzw. 16 in die Referenzwinkellage gebracht und dann unter Beibehaltung dieser Referenzwinkellage die reibschlüssige Verbindung zwischen Zapfen 17 und Zahnrad 18 wieder hergestellt. Fig. 7 zeigt ein Beispiel eines Druckwerks 19 mit zwei Zylindern 02; 03, beispielsweise einem Formzylinder 02 und einem Übertragungszylinder 03, auf deren Zapfen 17 jeweils ein Zahnrad 18 reibschlüssig befestigt ist, wobei die beiden Zahnräder 18 miteinander kämmen.

Zur reibschlüssigen und spielfreien Verbindung zwischen Zapfen 17 und Zahnrad 18 ist jeweils eine Spanneinrichtung 21, insbesondere eine selbstzentrierende Ringspanneinrichtung 21 vorgesehen, deren Aufbau auch aus Fig. 8 deutlich wird. Demnach ist das Zahnrad 18 mit einem in axialer Richtung beidseitig vorstehenden Hohlwellenabschnitt 22 versehen, der auf den Zapfen 17 aufgeschoben ist. Auf den beiden radial vorstehenden Hohlwellenabschnitten 22 sind Spannelemente 23; 24, z. B. Ringspannelemente 23; 24 aufgesetzt, die einen äußeren Stufenkegelring 23 und eine innere Stufenkegelbüchse 24 umfassen, wobei deren Kontaktflächen konisch ausgebildet sind. Mittels Spannschrauben 26 werden die Ringspannelemente 23; 24 verspannt und somit das Zahnrad 18 in der gewünschten Winkellage am Zapfen 17 kraft- bzw. reibschlüssig fixiert.

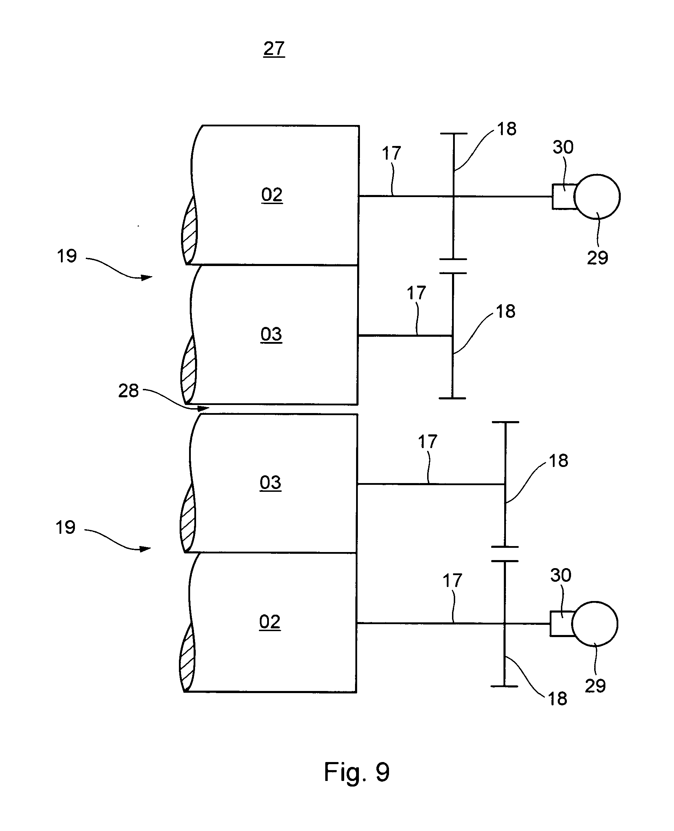

Fig. 9 zeigt eine Druckeinheit 27, welches zwei Druckwerke 19 umfasst, die jeweils einen ersten Zylinder 02, z. B. einen Formzylinder 02 und einen zweiten Zylinder 03, z. B. einen Übertragungszylinder 03 aufweisen. Die beiden Druckwerke 19 bilden zusammen eine Doppeldruckeinheit 27, wobei zwischen den beiden Übertragungszylindern 02 ein Druckspalt 28 zum doppelseitigen Bedrucken einer nicht dargestellten Bedruckstoffbahn definiert ist.

Die Zylinder 02; 03 eines jeden Druckwerks 19 sind jeweils von einen Antrieb 29, z. B einem Elektromotor 29, ggf. unter Zwischenschaltung eines Getriebes 30, gemeinsam angetrieben, wobei vom Formzylinder 02 auf den Übertragungszylinder 03 über eine formschlüssige Antriebsverbindung angetrieben wird, die beispielsweise von den Zahnrädern 18 gemäß Fig. 7 gebildet sein kann. Die Zahnräder 18 sind ausschließlich kraftschlüssig bzw. reibschlüssig mit den jeweiligen Zapfen 17 der Zylinder 02; 03 verbunden, beispielsweise in der im Zusammenhang mit Fig. 7 und 8 beschriebenen Weise. Der Antrieb 29 des einen Druckwerks 19 befindet sich nicht in formschlüssigem Antriebsverbund mit dem Antrieb 29 des anderen Druckwerks 19.

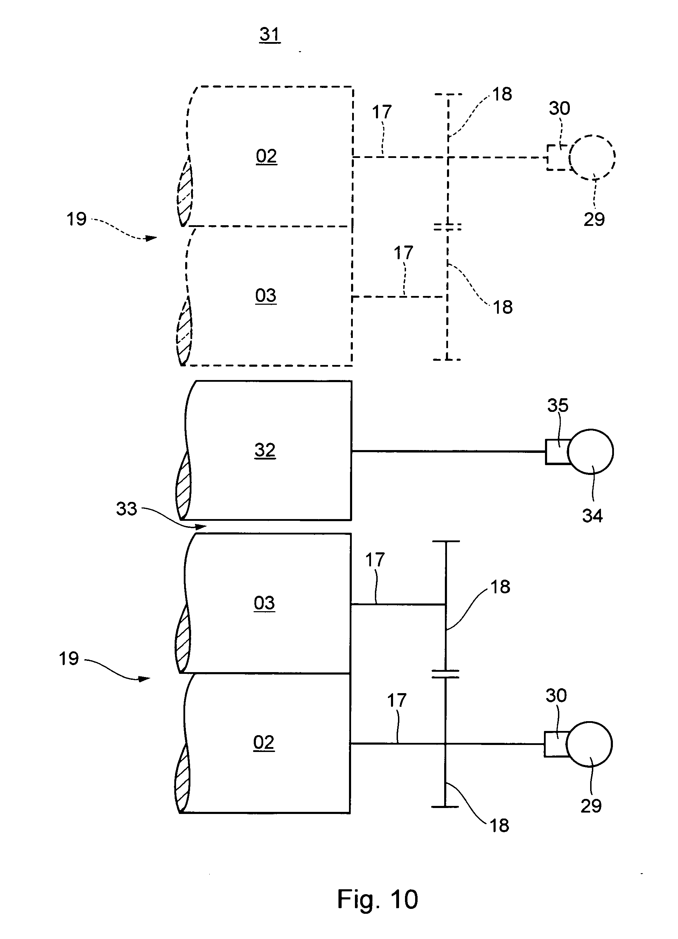

Fig. 10 zeigt eine weitere Druckeinheit 31, welches ein Druckwerk 19 umfasst, die einen ersten Zylinder 02, z. B. einem Formzylinder 02 und einen zweiten Zylinder 03, z. B. einen Übertragungszylinder 03 aufweist. Weiterhin ist ein dritter Zylinder 32, insbesondere ein Gegendruckzylinder 32 vorgesehen, wobei zwischen Übertragungszylinder 03 und Gegendruckzylinder 32 ein Druckspalt 33 zum einseitigen Bedrucken einer nicht dargestellten Bedruckstoffbahn definiert ist.

Die Zylinder 02; 03 des Druckwerks 19 sind von einem Elektromotor 29 gemeinsam angetrieben, wobei vom Formzylinder 02 auf den Übertragungszylinder 03 über eine formschlüssige Antriebsverbindung angetrieben wird, die beispielsweise von den Zahnrädern 18 gemäß Fig. 7 gebildet sein kann. Die Zahnräder 18 sind ausschließlich kraftschlüssig bzw. reibschlüssig mit den jeweiligen Zapfen 17 der Zylinder 02; 03 verbunden, beispielsweise in der im Zusammenhang mit Fig. 7 und 8 beschriebenen Weise. Der Gegendruckzylinder 32 ist von einem eigenen Antrieb 34, z. B. Elektromotor 34, ggf. unter Zwischenschaltung eines Getriebes 35, angetrieben. Der Antrieb 29 des Druckwerks 19 befindet sich nicht in formschlüssigem Antriebsverbund mit dem Antrieb 34 des Gegendruckzylinders 32.

Der Gegendruckzylinder 32 kann auch ein Satellitenzylinder 32 sein. In diesem Fall sind dem Gegendruckzylinder 32 mehrere Druckwerke 19 zugeordnet, wie in Fig. 10 durch die gestrichelten Linien angedeutet ist. Insbesondere können dem Satellitenzylinder 32 vier Druckwerke 19 zugeordnet sein, wodurch ein 9-Zylinder-Satelliten-Druckeinheit 31 gebildet wird. Die Antriebe 29 der Druckwerke 19 befinden sich weder untereinander noch mit dem Antrieb 34 des Satellitenzylinders in 32 formschlüssigem Antriebsverbund.

Die Formzylinder 02 und/oder Übertragungszylinder 03 weisen mindestens einen Kanal zur Aufnahme eines Aufzugs, z. B. einer Druckplatte oder eines Gummituchs auf. Die Referenzwinkellage, insbesondere die Passbohrung 12, ist relativ zu diesem Kanal festgelegt.

Sind, insbesondere in einem Druckwerk 19, Formzylinder 02 und Übertragungszylinder 03 mittels Zahnräder 18 formschlüssig miteinander in Antriebsverbindung und wird dieses Druckwerk 19 von einen eigenen Antriebsmotor 29 angetrieben, werden beispielsweise die Zylinder 02; 03 in ihrer Referenzposition zueinander gebracht. Anschließend wird zumindest ein Zahnrad 18 oder beide Zähnräder 18 auf dem zugehörigen Zapfen 17 fixiert und diese Referenzposition dem Antriebsmotor 29, z. B. durch Abspeichern in der Antriebssteuerung 08 zugeordnet.

In einer bevorzugten Form weisen alle Zylinder in der Druckeinheit 27, 31 zumindest eine Passöffnung 12, insbesondere eine Passbohrung 12 auf.

### Bezugszeichenliste

- 01: Druckwerk
- 02: Zylinder, Formzylinder
- 03: Zylinder, Übertragungszylinder
- 04: Antrieb, Elektromotor
- 05: -
- 06: Antrieb, Elektromotor
- 07: Kupplung
- 08: Antriebssteuerung
- 09: Winkelgeber, Multiturngeber
- 10: -
- 11: Maschinenleitstand, Rechner
- 12: Passbohrung
- 13: Passbolzen, Passstange
- 14: Bezugspunkt, externer, Anschlag
- 15: -
- 16: Lehre
- 17: Zapfen
- 18: Zahnrad
- 19: Druckwerk
- 20: -
- 21: Spanneinrichtung, Ringspanneinrichtung
- 22: Hohlwellenabschnitt
- 23: Spannelement, Ringspannelement, Stufenkegelring
- 24: Spannelement, Ringspannelement, Stufenkegelbüchse
- 25: -
- 26: Spannschraube
- 27: Druckeinheit, Doppeldruckeinheit
- 28: Druckspalt
- 29: Antrieb, Elektromotor
- 30: Getriebe
- 31: Druckeinheit, 9-Zylinder-Satelliten-Druckeinheit
- 32: Zylinder, Gegendruckzylinder, Satellitenzylinder
- 33: Druckspalt
- 34: Antrieb, Elektromotor
- 35: Getriebe

## Patentansprüche

1. Druckeinheit (27; 31) mit mindestens einem Druckwerk (19) mit mindestens einem Formzylinder (02) und einem Übertragungszylinder (03), wobei jeder Zylinder (02; 03) auf seinem Zapfen (17) mindestens ein Zahnrad (18) aufweist, wobei mindestens zwei Zylinderpaare angeordnet sind, die jeweils einen Formzylinder (02) und einen Übertragungszylinder (03) umfassen, wobei sich die Zylinder (02; 03) eines jeden Zylinderpaars in mechanisch formschlüssiger Antriebsverbindung befinden und über einen gemeinsamen Elektromotor (29) antreibbar sind, wobei für jedes Zylinderpaar ein eigener Elektromotor (29) vorgesehen ist, **dadurch gekennzeichnet, dass** die Zahnräder (18) auf dem jeweiligen Zapfen (17) ausschließlich reibschlüssig befestigt sind und dass eine an mindestens einem Zylinder (02; 03) in definierter Position befestigbare Ausrichtvorrichtung (12, 13; 16) angeordnet ist.

2. Druckeinheit (27; 31) nach Anspruch 1, **dadurch gekennzeichnet, dass** die Zahnräder (18) auf den Zapfen (17) in jeder beliebigen Winkellage reibschlüssig befestigbar sind.

3. Druckeinheit (27; 31) nach Anspruch 1 oder 2, **dadurch gekennzeichnet, dass** die Zahnräder (18) auf den Zapfen (17) mittels Spanneinrichtungen (21) befestigbar sind.

4. Druckeinheit (27; 31) nach Anspruch 3, **dadurch gekennzeichnet, dass** die Spanneinrichtungen (21) selbstzentrierend sind.

5. Druckeinheit (27; 31) nach Anspruch 3 oder 4, **dadurch gekennzeichnet, dass** die Spanneinrichtungen (21) konische Spannelemente (23; 24) umfassen.

6. Druckeinheit (27; 31) nach einem der Ansprüche 3 bis 5, **dadurch gekennzeichnet, dass** die Spanneinrichtungen (21) Ringspannelemente (23; 24) umfassen.

7. Druckeinheit (27; 31) nach einem der Ansprüche 1 bis 6, **dadurch gekennzeichnet, dass** die Zahnräder (18) von Formzylinder (02) und Übertragungszylinder (03) miteinander mittelbar oder unmittelbar in formschlüssigem Eingriff stehen.

8. Druckeinheit (27; 31) nach Anspruch 1, **dadurch gekennzeichnet, dass** Zahnräder (18) der Antriebsverbindung mit dem jeweiligen Zylinder (02; 03) reibschlüssig verbunden sind.

9. Druckeinheit (31) nach Anspruch 1, **dadurch gekennzeichnet, dass** ein Gegendruckzylinder (32) angeordnet ist.

10. Druckeinheit (27; 31) nach Anspruch 9, **dadurch gekennzeichnet, dass** der Gegendruckzylinder (32) keine formschlüssige Antriebsverbindung mit dem mindestens einen Zylinderpaar aufweist.

11. Druckeinheit (27; 31) nach Anspruch 10, **dadurch gekennzeichnet, dass** der Gegendruckzylinder (32) mittels eines eigenen Elektromotors (34) antreibbar ist.

12. Druckeinheit (27) nach Anspruch 1, **dadurch gekennzeichnet, dass** zwei Zylinderpaare vorgesehen sind, die zusammen eine Doppeldruckeinheit (27) bilden.

13. Druckeinheit (31) nach Anspruch 9, **dadurch gekennzeichnet, dass** der Gegendruckzylinder (32) ein Satellitenzylinder (32) ist.

14. Druckeinheit (31) nach Anspruch 13, **dadurch gekennzeichnet, dass** die Druckeinheit (31) eine 9-Zylinder-Satellitendruckeinheit (31) ist.

15. Druckeinheit (27; 31) nach Anspruch 1, **dadurch gekennzeichnet, dass** jeder Zylinder (02; 03) eines jeden Zylinderpaars auf seinem Zapfen (17) ein Zahnrad (18) aufweist, und dass die Zahnräder (18) auf dem jeweiligen Zapfen (17) ausschließlich reibschlüssig befestigt sind.

16. Druckeinheit nach Anspruch 1, **dadurch gekennzeichnet, dass** jeder Zylinder (02; 03) zumindest eine Passöffnung (12), insbesondere Passbohrung (12) aufweist.

17. Druckeinheit nach Anspruch 1, **dadurch gekennzeichnet, dass** an dem mindestens einen Zylinder (02; 03) eine sich in radialer Richtung erstreckende Passbohrung (12) ausgebildet ist.

18. Druckeinheit nach Anspruch 17, **dadurch gekennzeichnet, dass** die Passbohrung (12) im Randbereich des mindestens einen Zylinders (02; 03) angeordnet ist.

19. Druckeinheit nach Anspruch 17 oder 18, **dadurch gekennzeichnet, dass** die Ausrichtvorrichtung (12, 13; 16) einen in die Passbohrung (12) einsetzbaren Passbolzen (13) umfasst.

20. Druckeinheit nach Anspruch 1, oder 17 bis 19, **dadurch gekennzeichnet, dass** die Ausrichtvorrichtung (12, 13) mit einem Anschlag (14) zusammenwirkend angeordnet ist.

21. Druckeinheit nach Anspruch 1, oder 17 bis 19, **dadurch gekennzeichnet, dass** die Ausrichtvorrichtung (12, 13; 16) eine Lehre umfasst.

22. Druckeinheit nach Anspruch 19 und 21, **dadurch gekennzeichnet, dass** die Lehre (16) mit den Passbolzen (13) verbindbar ist.

## Claims

1. A printing unit (27; 31) with at least one printing couple (19) with at least one forme cylinder (02) and one transfer cylinder (03), wherein each cylinder (02; 03) has at least one toothed wheel (18) on its journal (17), wherein at least two pairs of cylinders are provided which comprise one forme cylinder (02) and one transfer cylinder (03) in each case, wherein the cylinders (02; 03) of each pair of cylinders are mechanically connected in a driving manner with positive locking and are capable of being driven by way of a common electric motor (29), wherein a separate electric motor (29) is provided for each pair of cylinders, **characterized in that** the toothed wheels (18) are fastened exclusively in a frictionally locking manner to the respective journal (17), and an orientation apparatus (12, 13; 16) capable of being fastened to at least one cylinder (02; 03) in a defined position is provided.

2. A printing unit (27; 31) according to Claim 1, **characterized in that** the toothed wheels (18) are capable of being fastened to the journal (17) in a frictionally locking manner in any desired angular position.

3. A printing unit (27; 31) according to Claim 1 or 2, **characterized in that** the toothed wheels (18) are capable of being fastened to the journal (17) by means of clamping devices (21).

4. A printing unit (27; 31) according to Claim 3, **characterized in that** the clamping devices (21) are self-centring.

5. A printing unit (27; 31) according to Claim 3 or 4, **characterized in that** the clamping devices (21) comprise conical clamping elements (23; 24).

6. A printing unit (27; 31) according to any one of Claims 3 to 5, **characterized in that** the clamping devices (21) comprise annular clamping elements (23; 24).

7. A printing unit (27; 31) according to any one of Claims 1 to 6, **characterized in that** the toothed wheels (18) of the forme cylinder (02) and the transfer cylinder (03) engage with each other indirectly or indirectly in a positively locking manner.

8. A printing unit (27; 31) according to Claim 1, **characterized in that** the toothed wheels (18) of the drive connexion are connected to the respective cylinder (02; 03) in a frictionally locking manner.

9. A printing unit (31) according to Claim 1, **characterized in that** a counter-impression cylinder (32) is provided.

10. A printing unit (27; 31) according to Claim 9, **characterized in that** the counter-impression cylinder (32) has no drive connexion with positive locking to the at least one pair of cylinders.

11. A printing unit (27; 31) according to Claim 10, **characterized in that** the counter-impression cylinder (32) is capable of being driven by means of a separate electric motor (34).

12. A printing unit (27) according to Claim 1, **characterized in that** two pairs of cylinders are provided, which together form a double printing unit (27).

13. A printing unit (31) according to Claim 9, **characterized in that** the counter-impression cylinder (32) is a satellite cylinder (32).

14. A printing unit (31) according to Claim 13, **characterized in that** the printing unit (31) is a 9-cylinder satellite printing unit (31).

15. A printing unit (27; 31) according to Claim 1, **characterized in that** each cylinder (02; 03) of each pair of cylinders has a toothed wheel (18) on its journal (17), and the toothed wheels (18) are fastened exclusively with friction locking to the respective journal (17).

16. A printing unit according to Claim 1, **characterized in that** each cylinder (02; 03) has at least one fitting opening (12), in particular a fitting bore (12).

17. A printing unit according to Claim 1, **characterized in that** a fitting bore (12) extending in the radial direction is formed on the at least one cylinder (02; 03).

18. A printing unit according to Claim 17, **characterized in that** the fitting bore (12) is situated in the edge region of the at least one cylinder (02; 03).

19. A printing unit according to Claim 17 or 18, **characterized in that** the orientation apparatus (12, 13; 16) comprises a fitting pin (13) capable of being inserted into the fitting bore (12).

20. A printing unit according to Claim 1 or 17 to 19, **characterized in that** the orientation apparatus (12, 13) is arranged so as to co-operate with a stop (14).

21. A printing unit according to Claim 1 or 17 to 19, **characterized in that** the orientation apparatus (12, 13; 16) comprises a gauge.

22. A printing unit according to Claim 19 and 21, **characterized in that** the gauge (16) is capable of being connected to the fitting pins (13).

## Revendications

1. Unité d'impression (27 ; 31), comprenant au moins un groupe d'impression (19) avec au moins un cylindre de forme (02) et un cylindre de transfert (03), chaque cylindre (02 ; 03) présentant sur son tourillon (17) au moins une roue dentée (18), au moins deux paires de cylindres étant disposées, comprenant chacune un cylindre de forme (02) et un cylindre de transfert (03), les cylindres (02 ; 03) de chaque paire de cylindres se trouvant en liaison d'entraînement par liaison à ajustement de forme mécanique et étant susceptibles d'être entraînés par un moteur électrique (29) commun, sachant que, pour chaque paire de cylindres, est prévu un moteur électrique (29) propre, **caractérisée en ce que** les roues dentées (18) sont fixées exclusivement avec une liaison par friction sur le tourillon (17) respectif, et **en ce qu'**un dispositif d'alignement (12, 13 ; 16), susceptible d'être fixé en une position définie en au moins un cylindre (02 ; 03), est disposé.

2. Unité d'impression (27 ; 31) selon la revendication 1, **caractérisée en ce que** les roues dentées (18) montées sur le tourillon (17) sont susceptibles d'être fixées, par une liaison par friction, en toute position angulaire, quelconque.

3. Unité d'impression (27 ; 31) selon la revendication 1 ou 2, **caractérisée en ce que** les roues dentées (18) sont susceptibles d'être fixées sur le tourillon (17) à l'aide de dispositifs de serrage (21).

4. Unité d'impression (27 ; 31) selon la revendication 3, **caractérisée en ce que** les dispositifs de serrage (21) sont autocentreurs.

5. Unité d'impression (27 ; 31) selon la revendication 3 ou 4, **caractérisée en ce que** les dispositifs de serrage (21) comprennent des éléments de serrage (23 ; 24) coniques.

6. Unité d'impression (27 ; 31) selon l'une des revendications 3 à 5, **caractérisée en ce que** les dispositifs de serrage (21) comprennent des éléments de serrage annulaires (23 ; 24).

7. Unité d'impression (27 ; 31) selon l'une des revendications 1 à 6, **caractérisée en ce que** les roues dentées (18), du cylindre de forme (02) et du cylindre de transfert (03), s'engrènent entre elles indirectement ou directement, par une liaison à ajustement de forme.

8. Unité d'impression (27 ; 31) selon la revendication 1, **caractérisée en ce que** les roues dentées (18) de la liaison d'entraînement sont reliées au cylindre (02 ; 03) respectif par une liaison à friction.

9. Unité d'impression (31) selon la revendication 1, **caractérisée en ce qu'**est prévu un cylindre de contre-pression (32).

10. Unité d'impression (27 ; 31) selon la revendication 9, **caractérisée en ce que** le cylindre de contre-pression (32) ne présente aucune liaison d'entraînement opérant par ajustement de forme avec la au moins une paire de cylindres.

11. Unité d'impression (27 ; 31) selon la revendication 10, **caractérisée en ce que** le cylindre de contre-pression (32) est susceptible d'être entraîné à l'aide d'un moteur électrique (34) propre.

12. Unité d'impression (27) selon la revendication 1, **caractérisée en ce que** deux paires de cylindres sont prévues, formant ensemble l'unité une impression double (27).

13. Unité d'impression (31) selon la revendication 9, **caractérisée en ce que** le cylindre de contre-pression (32) est un cylindre satellite (32).

14. Unité d'impression (31) selon la revendication 13, **caractérisée en ce que** l'unité d'impression (31) est une unité d'impression satellite à 9 cylindres (31).

15. Unité d'impression (27 ; 31) selon la revendication 1, **caractérisée en ce que** chaque cylindre (02 ; 03) de chaque paire de cylindres présente sur son tourillon (17) une roue dentée (18), et **en ce que** les roues dentées (18) sont fixées sur le tourillon (17) respectif exclusivement par une liaison par friction.

16. Unité d'impression selon la revendication 1, **caractérisée en ce que** chaque cylindre (02 ; 03) présente au moins une ouverture d'ajustage (12), en particulier un perçage d'ajustage (12).

17. Unité d'impression selon la revendication 1, **caractérisée en ce que** sur le au moins un cylindre (02 ; 03) est réalisé un perçage d'ajustage (12) s'étendant en direction radiale.

18. Unité d'impression selon la revendication 17, **caractérisée en ce que** le perçage d'ajustage (12) est disposé dans la zone de bordure du au moins un cylindre (02 ; 03).

19. Unité d'impression selon la revendication 17 ou 18, **caractérisée en ce que** le dispositif d'alignement (12, 13 ; 16) comprend un boulon d'ajustage (13) susceptible d'être inséré dans le perçage d'ajustage (12).

20. Unité d'impression selon la revendication 1 ou 17 à 19, **caractérisée en ce que** le dispositif d'alignement (12, 13) est disposé en coopérant avec une butée (14).

21. Unité d'impression selon la revendication 1 ou 17 à 19, **caractérisée en ce que** le dispositif d'alignement (12, 13 ; 16) comprend un calibre.

22. Unité d'impression selon les revendications 19 et 21, **caractérisée en ce que** le calibre (16) est susceptible d'être relié aux boulons d'ajustage (13).
